# EUROPÄISCHE PATENTANMELDUNG

(11) **EP 4 544 895 A1**
(43) Veröffentlichungstag der Anmeldung: **30.04.2025**
(21) Anmeldenummer: 24207995.2
(22) Anmeldetag: 22.10.2024
(51) Int. Cl.: A01C 3/06, A01C 17/00, A01C 15/12

(54) **STREUFAHRZEUG MIT EINSTELLBAREN STREUTELLERN**

(30) Priorität: 24.10.2023 DE 102023129194
(71) Anmelder: B. Strautmann & Söhne GmbH u. Co. KG, 49196 Bad Laer (DE)
(72) Erfinder: Oelgeschläger, Oliver, 49163 Bohmte (DE)
(74) Vertreter: Dr. Träger & Strautmann PAe PartG mbB

(57) **Zusammenfassung**

Die Erfindung betrifft ein landwirtschaftliches Streufahrzeug (100) umfassend
einen Laderaum (10) zur Aufnahme von Düngematerial mit einer angetriebenen Transporteinrichtung (15), und ein heckseitig angebrachtes Streuwerk (19) mit Streutellern (T1, T2), deren Neigung gegenüber einer Horizontalen (H2) quer zur Fahrtrichtung (FR) des Streufahrzeugs einstellbar ist.

Um das Streubild zu verbessern, wird vorgeschlagen, dass das Streufahrzeug als Anhänger oder Selbstfahrer ausgebildet und zur Ausbringung von organischem Düngematerial, wie beispielsweise Stalldung, vorgesehen ist. Das Streuwerk umfasst ferner zwei horizontal angeordnete Streuwalzen (30) und einen darunter angeordneten Außenrahmen (60), an dem die Streuteller neigbar angebracht sind. Weiterhin weist das Streuwerk Neigungseinstelleinrichtungen (50, 50-1, 50-2) auf, durch welche für jeden Streuteller ein individueller Neigungswinkel gegenüber der Horizontalen und eine individuelle beliebig wählbare Neigungsrichtung einstellbar sind. Das Streufahrzeug ist mit einer Steuerungseinrichtung (25) zum Steuern der Neigungseinstelleinrichtungen während des Düngematerial-Ausbringungsbetriebs versehen und/oder koppelbar.

## Beschreibung

Die Erfindung betrifft einen Düngerstreuer. Im Hinblick auf die auszubringenden Streugüter lassen sich die Düngerstreuer unterteilen in Düngerstreuer zur Ausbringung von körnigem Streugut, insbesondere mineralischen Düngemitteln und Düngerstreuern zur Ausbringung von vorrangig organischen Düngematerial wie Stalldung, Kompost, Bioklärschlamm, organischem Dünger, Laub oder Gärsubstraten.

Aus DE 37 18 663 A1 ist einen Düngerstreuer zur Ausbringung von körnigem Streugut bekannt, welcher zum Anbau an einen Schlepper vorgesehen ist. Der Düngerstreuer weist einem quer zur Fahrtrichtung angeordneten Düngerbehälter mit zwei unteren Ausbringöffnungen auf unter denen jeweils ein Streuteller angeordnet ist. Die Streuscheiben kippbar, jedoch ist der Düngerstreuer aufgrund seiner technischen Konzeption als Mineraldüngerstreuer zur Ausbringung von organischen Düngemitteln ungeeignet.

Der erfindungsgemäße Düngerstreuer betrifft ein als landwirtschaftliches Streufahrzeug zur Ausbringung von organischem Düngematerial nach dem Oberbegriff des Anspruchs 1.

Das Streufahrzeug umfasst einen Laderaum zur Aufnahme von Düngematerial mit zwei Seitenwänden, einer Stirnwand und einem Boden mit einer Transporteinrichtung zum Transportieren des Düngematerials zu einem heckseitig angebrachten Streuwerk des Streufahrzeugs. Das Streuwerk ist ausgebildet zur Ausbringung des Düngematerials auf eine Agrarfläche. Weiterhin weist das Streufahrzeug eine Antriebseinrichtung für die Transporteinrichtung sowie ein Fahrgestell mit wenigstens einer Fahrzeugachse auf.

Im Arbeitseinsatz wird ein solches Streufahrzeug häufig von einer Zugmaschine, beispielsweise einem Traktor, gezogen. Alternativ dazu kann es jedoch auch einen eigenen Antrieb aufweisen und eine selbstfahrende Arbeitsmaschine ausbilden.

Aus DE 10 2017 120 048 A1 ist ein Streufahrzeug mit einem Zweiteller-Streuwerk bekannt, bei dem eine Beeinflussung der Wurfweite des Streuwerks bei unveränderter Drehzahl der Streuteller mittels Einstellung bzw. Veränderung der jeweiligen Neigung der beiden Streuteller gegenüber der Horizontalen quer zur Fahrtrichtung möglich ist. Wenn die Streuteller aus einer waagerechten Ausgangsposition zueinander geneigt werden, so dass die Streuteller von der Fahrzeugmitte zu der seitlichen Fahrzeugaußenkante ansteigend geneigt sind, wird das Streugut bei seiner Ausbringung nicht nur lediglich waagerecht nach hinten und zur Seite gefördert, sondern kann zudem bogenförmig abgeworfen werden. In Abhängigkeit vom Neigungswinkel der Streuteller erhöht sich hierdurch die Wurfweite.

Alternativ dazu kann auch eine geringere Arbeitsbreite im Vergleich zu waagerecht gestellten Streutellern erreicht werden. Hierbei werden die Streuteller quer zur Fahrtrichtung voneinander weggeneigt, so dass die Streuteller von der Fahrzeugmitte zur seitlichen Fahrzeugaußenkante abfallend geneigt sind.

Zwar lässt sich das Streubild des ausgebrachten Streugutes durch die in DE 10 2017 120 048 A1 vorgeschlagene Realisierung zur Neigungseinstellung der Streuteller quer zur Fahrtrichtung variieren, jedoch werden die hierdurch erzielten Effekte unterschiedlichen Randbedingungen, wie beispielsweise der Art des Streugutes, der Neigung der zu bestreuenden Bodenfläche (Hanglagen) oder dem Abstand zu Feldrändern ("Grenzstreuen") nicht immer ausreichend gerecht.

Aufgabe der Erfindung ist es, die beschriebenen Nachteile zu beseitigen und ein Streufahrzeug zur Ausbringung von organischem Düngematerial vorzuschlagen, das im Arbeitseinsatz unter unterschiedlichsten Randbedingungen ein optimales oder zumindest ein optimiertes Streubild des ausgebrachten Streugutes erzeugt.

Diese Aufgabe wird gelöst durch ein Streufahrzeug mit den Merkmalen des Anspruchs 1.

### Definitionen:

Unter einem Streufahrzeug wird ein gezogenes oder selbstfahrendes Fahrzeug mit wenigstens einer Fahrzeugachse verstanden, das - im Gegensatz zu einem an einem Traktor angebauten Kunstdünger oder Schleuderstreuer - zur Ausbringung von organischem Dünger vorgesehen ist. Unter organischem Dünger werden Streugüter wie Kompost, Stallmist, Gärsubstrat, Bio-Klärschlämme etc. verstanden.

Unter einer Transporteinrichtung wird eine Einrichtung zum Transport des im Laderaum des Streufahrzeuges enthaltenen Streuguts verstanden. Eine Transporteinrichtung kann beispielsweise ein um den Boden des Laderaums umlaufendes Förderband oder ein sogenannter Kratzboden sein. Ein Kratzboden umfasst einen oder mehrere Förderstränge, die in der Regel zwei Kettensträngen aufweisen. Die Kettenstränge werden jeweils von auf Wellen gelagerten Kettenrädern oder Taschenrädern bewegt. Auf den Ketten sind in regelmäßigen Abständen Mitnehmerleisten zur Beförderung des Streuguts angebracht. Die erfindungsgemäßen Streufahrzeuge umfassen bevorzugt wenigstens zwei Förderstränge.

Unter einem Streuwerk wird ein Aggregat zur Verteilung von Streugut verstanden. Ein Streuwerk kann horizontale oder vertikale Streuwalzen aufweisen. Soweit horizontale Streuwalzen vorgesehen sind, kann unterhalb der Streuwalzen ein sogenanntes Breitstreuwerk, auch Tellerstreuwerk genannt, angeordnet sein. Das Tellerstreuwerk umfasst in der Regel zwei oder vier Teller mit darauf angebrachten Wurfschaufeln. Mit einem Tellerstreuwerk können Streubreiten von 20 Metern bis 30 Metern realisiert werden, wobei die ausgebrachte Streumenge sich ausgehend von der Mitte zu den Seiten hin reduziert. Die sich zu den Seiten hin reduzierenden Streumengen können durch eine überlappende Fahrweise ausgeglichen werden, so dass im Ergebnis eine weitgehend homogene Streugutverteilung auf einer Ackerparzelle bzw. Agrarfläche möglich ist.

Unter einem Stauschieber wird eine vertikal verschiebbare Wand verstanden, die zwischen Laderaum und Streuwerk angebracht ist und nach unten hin durch den Förderboden des Streufahrzeuges begrenzt wird. Im Arbeitseinsatz muss der Stauschieber zumindest soweit angehoben werden, dass der Förderboden zumindest etwas Streugut unter dem Stauschieber hindurch Richtung Streuwerk fördern kann. Die Höhenposition des Stauschiebers definiert eine Stauschieberöffnungsweite, die einen unmittelbaren Einfluss auf die Menge an Streugut hat, die dem Streuwerk zugeführt wird.

Unter dem englischsprachigen Begriff Precision Farming wird ein Verfahren der ortsdifferenzierten und zielgerichteten Bewirtschaftung landwirtschaftlicher Nutzflächen verstanden. Ziel des "Präzisionsackerbaus" ist es dabei, die Unterschiede des Bodens und der Ertragsfähigkeit innerhalb eines Feldes zu berücksichtigen. Die Positionen der Bearbeitungsmaschinen werden auf den Flurstücken erfasst und die Maschinen wiederum erfassen und dokumentieren die Kennwerte (zum Beispiel den Ertrag) schon während der Bearbeitung und/oder Ernte. Diese Daten werden dann ausgewertet und zu Applikationskarten weiterverarbeitet werden. Durch die Erstellung einer Applikationskarte kann die Sollwertmenge beispielsweise im Zusammenhang mit der Düngung innerhalb eines Schlages die Düngemenge je nach Bodenbeschaffenheit und individueller Ortsposition variiert werden. Eine Applikationskarte lässt sich über ein Bedienterminal, beispielsweise mittels eines USB-Sticks, in die Steuerung eines Streufahrzeuges einlesen und dort verarbeiten, so dass die mit dem Streufahrzeug durchzuführende Düngung darauf abstimmbar ist. Diese Bewirtschaftung wird *teilflächenspezifisch* genannt, da innerhalb eines großen Feldes (Schlag) die Auswirkungen unterschiedlicher Böden berücksichtigt werden können.

Unter einem Wiegesystem wird ein System zur Erfassung des auf einem Streufahrzeug momentan geladenen Streuguts verstanden. Vorzugsweise wird die Menge des ausgebrachten Streuguts kontinuierlich dynamisch erfasst und geregelt. Dies geschieht insbesondere, indem beim Ausbringen des Streugutes die Gewichtsabnahme erfasst und mit einer vordefinierten Soll-Ausbringmenge verglichen wird.

Als Streuwinkel wird ein Winkelbereich bezeichnet, innerhalb dessen ein Ackerboden mit von einem Streuwerk ausgebrachten Streugut beaufschlagt wird.

Das erfindungsgemäße landwirtschaftliche Streufahrzeug zur Ausbringung von Düngematerial, nämlich organischem Dünger oder Kalk, umfasst
- einen Laderaum zur Aufnahme von Düngematerial, welcher zwei Seitenwände, eine Stirnwand und einen Boden mit einer Transporteinrichtung zum Transportieren des Düngematerials zu einem heckseitig angebrachten Streuwerk umfasst;
- eine Antriebseinrichtung für die Transporteinrichtung;
- ein Fahrgestell mit wenigstens einer Fahrzeugachse; und
- das heckseitig angebrachte Streuwerk, wobei das Streuwerk Streuteller umfasst, die seitlich nebeneinander und zur Aufnahme des von der Transporteinrichtung zu dem Streuwerk transportierten Düngematerials auf ihrer Oberseite angeordnet sind, wobei die Streuteller um ihre jeweilige Drehachse durch eine Streutellerantriebseinrichtung in Drehung versetzbar sind, und ausgebildet sind, während sie in Drehung versetzt sind bzw. um ihre Drehachse rotieren, das auf ihrer Oberseite aufgenommene Düngematerial von dem Streufahrzeug auf eine Agrarfläche wegzuschleudern.

Die Drehachse des Streutellers ist üblicherweise in der Mitte des Streutellers angeordnet und ist orthogonal zur Drehebene des Streutellers ausgerichtet. Auf der Oberseite der Streuteller können Mitnehmer oder Wurfflügel angebracht sein, die das auf der Oberseite der rotierenden Streuteller auftreffende Düngematerial erfassen und hauptsächlich seitlich und nach hinten von dem Streufahrzeug auf die Agrarfläche wegschleudern.

Die für den Drehantrieb der Streuteller vorgesehenen Streutellerantriebseinrichtungen können als Hydromotor und/oder Elektromotor ausgebildet sein. Alternativ oder optional können die Streuteller mechanisch über eine Getriebe und/oder eine Zapfwelle angetrieben werden.

Zur Lösung der Aufgabe wird erfindungsgemäß vorgeschlagen, dass
- das Streufahrzeug als Anhänger oder Selbstfahrer ausgebildet und zur Ausbringung von organischem Düngematerial, wie beispielsweise Stalldung, Kompost, Bioklärschlamm, organischem Dünger, Laub oder Gärsubsubstarten vorgesehen ist,
- das Streuwerk ferner zwei horizontal angeordnete Streuwalzen und einen unterhalb der Streuwalzen angeordneten Außenrahmen umfasst, an dem die Streuteller auch gegenüber einer Horizontalen in Fahrtrichtung in eine beliebige Neigungsrichtung neigbar angebracht sind,
- das Streuwerk Neigungseinstelleinrichtungen aufweist, durch welche für jeden dieser neigbaren Streuteller während eines Düngematerial-Ausbringungsbetriebs des Streufahrzeugs ein individueller Neigungswinkel des Streutellers gegenüber der Horizontalen und der Horizontalen einstellbar ist,
- eine individuelle beliebig wählbare Neigungsrichtung der Streuteller und/oder steuerbar einstellbar ist, und
- dass das Streufahrzeug mit einer Steuerungseinrichtung zum Steuern der Neigungseinstelleinrichtungen während des Düngematerial-Ausbringungsbetriebs versehen und/oder koppelbar ist.

Die Streuteller sind somit nicht nur in einer Richtung, beispielsweise quer zur Fahrtrichtung, sondern zusätzlich in einer weiteren Richtung, beispielsweise in Fahrzeuglängsrichtung neigbar. Die momentane Neigung eines Streutellers wird somit durch einen Neigungsvektor bestimmt, der sich aus den beiden Einzel-Neigungen zusammensetzt bzw. durch diese beiden Einzel-Neigungen definiert ist.

Das erfindungsgemäße Streufahrzeug ermöglicht somit die Ausbringung von Düngematerial mit einer vorgegebenen Streubreite und/oder einer vorgegebenen Mengenverteilung auf einer Agrarfläche.

Der Begriff des neigbaren Streutellers bezeichnet grundsätzlich einen Streuteller, dessen Drehebene bzw. Drehachse gegenüber der Horizontalen aus der Waagerechten bzw. Horizontalen verändert bzw. geneigt werden kann. Die Drehebene eines geneigten Streutellers liegt in einer zur Horizontalen um einen Neigungswinkel versetzten, schrägen Ebene. Hier ist die Horizontale lediglich beispielhaft zur Erleichterung des Verständnisses als Bezugsebene für einen zu neigenden bzw. neigbaren Streuteller verwendet, und es kann ebenso eine beispielsweise um 10 Grad oder 20 Grad zur Horizontalebene geneigte Ebene als Bezugsebene gewählt werden.

Der Begriff des Neigungswinkels bezeichnet das Ausmaß der Neigung des Streutellers und kann als Maß des Winkels zwischen der Position des Streutellers in seiner waagerechten horizontalen bzw. nicht geneigten Position - im Sinne einer Bezugsebene - und der vorliegenden geneigten Position angegeben werden. Bei dem erfindungsgemäßen Streufahrzeug ist jeder der neigbaren Streuteller mindestens um einen Neigungswinkel von 10 Grad gegenüber der Bezugsebene in jede beliebige Neigungsrichtung von 0 Grad bis 360 Grad neigbar. Aufgrund von Platzbeschränkungen des Streuwerks beträgt der maximale Neigungswinkel ca. 25 Grad.

Mit dem Begriff der beliebigen Neigungsrichtung von 0 Grad bis 360 Grad ist gemeint, dass der jeweilige Streuteller in jede beliebige in der Bezugsebene, wie beispielsweise die Horizontale, gewählte Richtung mittels der durch die Steuereinrichtung gesteuerten Neigungseinstelleinrichtung(en) geneigt werden kann, also nicht nur quer zur Fahrtrichtung des Streufahrzeugs, sondern auch in andere Richtungen, wie beispielsweise längs zur Fahrtrichtung des Streufahrzeugs. Beschreibt man die Neigungsrichtung mittels eines Winkelmaßes in der Bezugsebene, so können die Neigungsrichtung zur Fahrtrichtung (entspricht einer Neigung nach vorne) als 0 Grad, die Neigungsrichtung entgegensetzt zur Fahrtrichtung (entspricht einer Neigung zum Heck des Fahrzeugs) 180 Grad, und die Neigungsrichtungen quer zur Fahrtrichtung als 90 Grad und 270 Grad bezeichnet werden. Unter Bezug auf eine derartige Beschreibung der Neigungsrichtung sieht die Erfindung vor, dass mehrere Streuteller in eine jeweils individuelle Neigungsrichtung von 0 Grad bis 360 Grad steuerbar geneigt sein können. Der Wert der einzustellenden oder aktuellen Neigungsrichtung kann beispielsweise durch Angabe der randseitigen Position des Streutellers als Winkelwert angegeben werden, der aufgrund der einzustellenden oder eingestellten Neigung die maximale Auslenkung und somit den geringsten oder größten Bodenabstand einnimmt.

Wenn ein Streuteller zu seiner nächstliegenden rechten/linken und/oder vorderen/hinteren Fahrzeugaußenkante geneigt ist, so fällt die Drehebene bzw. oberseitige Fläche des Streutellers - und damit auch die Aufnahmefläche des Streutellers für das Streugut - von der Fahrzeugmitte zu der rechten/linken und/oder vorderen/hinteren Fahrzeugaußenkante hin ab. Dem entsprechend ist der Bodenabstand des fahrzeugaußenseitigen Randes des Streutellers geringer als der Bodenabstand des fahrzeugmittig gelegenen Randes des Streutellers auf der gegenüberliegenden Seite des Streutellers. Ein derartig geneigter Streuteller wird hier auch als nach außen geneigter Streuteller bezeichnet. Bei einem derart nach außen in eine Neigungsrichtung geneigten Streuteller sind bei unveränderter Drehzahl des Streutellers und unveränderter Fahrgeschwindigkeit des Streufahrzeugs im Vergleich zu einem waagerecht betriebenen Streuteller die maximale Schleuderweite des von dem Streuteller in der Neigungsrichtung des Streutellers ausgebrachten Düngematerials reduziert und gleichzeitig die in der Neigungsrichtung des Streutellers pro Flächeneinheit ausgebrachte Düngematerialmenge erhöht.

Wenn ein Streuteller von seiner nächstliegenden rechten/linken und/oder vorderen/hinteren Fahrzeugaußenkante weggeneigt ist, so steigt die Drehebene bzw. oberseitige Fläche des Streutellers - und damit auch die Aufnahmefläche des Streutellers für das Streugut - von der Fahrzeugmitte zu der rechten/linken und/oder vorderen/hinteren Fahrzeugaußenkante hin an. Dem entsprechend ist der Bodenabstand des fahrzeugaußenseitigen Randes des Streutellers größer als der Bodenabstand des fahrzeugmittig gelegenen Randes des Streutellers auf der gegenüberliegenden Seite des Streutellers. Ein derartig geneigter Streuteller wird hier auch als nach innen bzw. zur Fahrzeugmitte geneigter Streuteller bezeichnet. Ein derartig nach innen in eine Neigungsrichtung geneigter und um seine Drehachse rotierender Streuteller wirft das Streugut bogenförmig ab, was bei unveränderter Drehzahl des Streutellers und unveränderter Fahrgeschwindigkeit des Streufahrzeugs im Vergleich zu einem waagerecht betriebenen Streuteller zu einer Vergrößerung des Abwurfwinkels - und damit bis zu einem gewissen Abwurfwinkel auch zur Vergrößerung des maximalen Schleuderweite - des von dem Streuteller in der Neigungsrichtung des Streutellers ausgebrachten Düngematerials führt. Das Ausmaß der Vergrößerung der maximalen Schleuderweite bzw. Wurfweite hängt von dem eingestellten Neigungswinkel ab. Gleichzeitig verringert sich die in der Neigungsrichtung des Streutellers pro Flächeneinheit ausgebrachte Düngematerialmenge.

Die Neigungseinstelleinrichtungen können als hydraulisch, elektrisch und/oder mechanisch antreibbare Stellmotoren und/oder Stellglieder ausgebildet sein, deren Drehung, Auslenkung und/oder Vorschub zum Einstellen der Neigungswinkels und der Neigungsrichtung eines jeweiligen Streutellers durch die Steuerungseinrichtung steuerbar sind.

Durch die genannten Neigungseinstelleinrichtungen ergeben sich viele Vorteile. Insbesondere ermöglichen sie eine an individuelle Anforderungen angepasste Einstellung der Streutellerneigungen. Solche individuellen Anforderungen ergeben sich beispielsweise aus der Art des Streuguts, der gewünschten Wurfweite, den Grenzlinien der zu bestreuenden Fläche, der Neigung des Untergrunds (Hanglage) oder der Regulierung der pro Flächeneinheit auszubringenden Düngemittel.

Im Arbeitseinsatz wird das auf die Streuteller gefördert Streugut von auf den Streutellern angeordneten Mitnehmern, beispielsweise Streuflügeln, erfasst und durch die rotierenden Streuteller in Fahrtrichtung gesehen nach hinten und zu den Seiten hin ausgeworfen. Neben den spezifischen Eigenschaften der Streupartikel und der Abwurfgeschwindigkeit ist das Aussehen der genannten Flugparabel von dem Neigungswinkel und der Neigungsrichtung der Streuteller abhängig.

Wird beispielsweise der Austrag einer vordefinierten Streugutmenge pro Flächeneinheit gewünscht und lässt sich ein solches Streubild mit einer ganz bestimmten Einstellung, beziehungsweise Anordnung, der Streuteller erreichen, so kann dieses Wunschstreubild bei geänderten Randbedingungen nicht mehr erreicht werden.

Ist das Wunschstreubild beispielsweise für einen vordefinierten Fahrgassenabstand von 12 Metern ausgelegt, so wird dann, wenn das Streugut lediglich mit einem Fahrgassenabstand von 10 Metern ausgebracht wird, bei sonst gleichen Randbedingungen zu viel Streugut pro Flächeneinheit ausgebracht.

Indem in dem genannten Beispiel die Streutellerneigung so eingestellt wird, dass sich die Streubreite reduziert, kann auch bei reduziertem Fahrgassenabstand das gewünschte Streubild realisiert werden.

Analog dazu kann bei leichten Streugütern (z.B. Streugütern mit hohem Strohanteil) oder schweren Streugütern mittels Einstellung der Streutellerneigung ein gewünschtes Streubild realisiert werden.

Bei Fahrten parallel zu einer Hanglage lassen sich die Streuteller so gegeneinander neigen, dass bei den Streutellern der Winkel der Streuteller-Oberfläche gegenüber dem geneigten Untergrund gleich ist und so trotz Hanglage zu beiden Seiten hin gleiche Wurfweiten realisierbar sind.

Bei Bergauf- oder Bergabfahrten an einer Hanglage können die Streuteller in Richtung der Fahrtrichtung oder entgegengesetzt dazu geneigt werden, um hanglagenbedingte Schwankungen der Wurfweite des hinter das Streufahrzeug geschleuderten Düngematerials zu kompensieren.

Für das Precision Farming bietet das vorgestellte Streufahrzeug besondere Vorteile. Die Steuerungseinrichtung des Streufahrzeugs ist ausgebildet zum Verarbeiten der für die zu bearbeitende Agrarfläche eingelesenen Applikationskarte und der darin enthaltenen Informationen über teilflächenspezifische Sollwertmengen des auszubringenden Streuguts. Aus diesen Informationen ermittelt die Steuerungseinrichtung die während des Düngematerial-Ausbringungsbetriebs in Abhängigkeit der aktuellen Position des Streufahrzeugs auf der Agrarfläche einzustellenden Neigungswinkel und Neigungsrichtungen der neigbaren Streuteller und steuert die Neigungseinstelleinrichtungen der Streuteller entsprechend. Dadurch können die Streuteller während der Ausbringungsfahrt in Abhängigkeit von der aktuellen Position des Streufahrzeugs auf der Agrarfläche gezielt derart eingestellt und nachgeführt werden, dass ihre Abwurffläche eine größere Zeitspanne auf eine mit viel Streugut zu beaufschlagende Teilfläche gerichtet ist, wohingegen die Abwurfflächen der Streuteller an wenig zu düngende Teilflächen durch entsprechend veränderte Neigungseinstellungen der Streuteller schnell vorbeigeführt werden. Somit ermöglicht das vorgestellte Streufahrzeug eine hochgenaue Ausbringung von Düngematerial gemäß teilflächenspezifischen Sollwertmengen des Düngematerials.

In einer Weiterbildung des erfindungsgemäßen Streufahrzeugs ist vorgesehen, dass mindestens einer der neigbaren Streuteller um eine primäre Neigachse und eine sekundäre Neigachse relativ zu dem Außenrahmen neigbar ist. Die primäre Neigachse und die sekundäre Neigachse eines jeweiligen Streutellers verlaufen nicht parallel zueinander.

Bezüglich einer jeden dieser Neigachse gilt die Festlegung, dass die Neigachse entlang einer Richtung in einer jeweiligen Ebene angeordnet ist. Die Neigachse stellt eine Drehachse eines entlang dieser Achse und um diese Achse drehbar gelagerten Körpers dar, hier der Streuteller. Eine Drehung des Körpers um diese Neigachse bzw. Drehachse ist gleichbedeutend mit einer Neigung des Körpers quer zur Richtung der Neigachse. Verläuft beispielsweise eine derartige Neigachse eines Streutellers in Fahrtrichtung des Streufahrzeugs, so ist der Streuteller um diese Achse drehbar gelagert. Ein Drehen des Streutellers um die in Fahrtrichtung ausgerichtete Drehachse bzw. Neigachse ist gleichbedeutend mit einem Neigen des Streutellers quer zur Fahrtrichtung, also zur links- oder rechtseitigen Fahrzeugaußenkante des Streufahrzeugs. Als weiteres Beispiel sei genannt, dass das Drehen des Streutellers um eine quer bzw. orthogonal zur Fahrtrichtung ausgerichtete Neigachse gleichbedeutend ist mit einem Neigen des Streutellers in oder entgegengesetzt zur Fahrtrichtung, also längs zur Fahrtrichtung.

Bezüglich der Anordnung der primären und der sekundären Neigachse eines jeweiligen neigbaren Streutellers ist bei dieser Weiterbildung eine derartige mechanische Kopplung der beiden Bewegungen der Neigachsen vorgesehen, dass eine Drehbewegung des Streutellers nur um die primären Neigachse, gleichbedeutend mit einer Neigung des Streutellers quer zur primären Neigachse, zwangsweise eine der Drehbewegung entsprechende Lageänderung der sekundären Neigachse relativ zu dem Außenrahmen bewirkt. Die sekundäre Neigachse wird also durch ein Neigen bzw. Drehen des Streutellers um die primäre Neigachse (in einem Beispiel längs zur Fahrtrichtung ausgerichtet) in eine zur Richtung der primären Neigachse orthogonale Richtung (in dem Beispiel quer zur Fahrtrichtung ausgerichtet) ebenfalls in diese zur Richtung der primären Neigachse orthogonale Richtung geneigt. Bei einem Neigen des Streutellers um die primäre Neigachse erfährt die zweite Neigachse automatisch eine diesem Neigevorgang entsprechende Ortsveränderung bzw. Lageveränderung. Andererseits verbleibt die primäre Neigachse bei einer Drehbewegung des Streutellers nur um die sekundäre Neigachse ortsfest relativ zu dem Außenrahmen.

Die Erfinder haben sich für die Implementierung eines in beliebige Richtungen gegenüber der Horizontalen neigbaren Streutellers an das Prinzip der kardanischen Aufhängung bzw. Lagerung angelehnt und dieses abgewandelt. Eine kardanische Aufhängung ermöglicht die Lagerung eines Objektes (beispielsweise eines Kompasses), dessen Umgebung (beispielsweise ein Schiff) in beliebige Richtungen geneigt wird, in unveränderter Ortslage in einer Lagerungsebene, sofern sich der Schwerpunkt des Objekts unterhalb der Lagerungsebene und somit näher zum Erdboden befindet. Der Begriff der unveränderten Ortslage bezeichnet hierbei, dass das Objekt sich trotz eines Neigevorgangs seiner Umgebung in eine beliebig gewählte Neigungsrichtung nicht mitneigt. Die Erfinder haben eine derartige Aufhängung dahingehend abgewandelt, indem sie Neigungseinstelleinrichtungen zum zwangsweisen Neigen des Streutellers gegen seine Ruhelage, die schwerkraftbedingt bei einer fehlenden Kopplung zwischen Neigungseinrichtung(en) und Streuteller eingenommen werden würde, zur Lösung der Aufgabe bereitstellen.

Mit dieser vorliegenden Weiterbildung wird eine einfache und zugleich im rauen Agrareinsatz widerstandsfähige Anbringung eines Streutellers an einem Streufahrzeug bereitgestellt.

In einer Fortbildung der oben dargestellten Weiterbildung des erfindungsgemäßen Streufahrzeugs ist vorgesehen, dass das Streuwerk für einen jeweiligen neigbaren Streuteller einen jeweiligen Streuteller-Tragrahmen aufweist, der um die primäre Neigachse des Streutellers neigbar an dem Außenrahmen angebracht ist, und dass der Streuteller um die sekundäre Neigachse neigbar an dem Streuteller-Tragrahmen angebracht ist.

Ein derartiger Streuteller ist also nicht direkt an dem Außenrahmen angebracht, sondern über einen Streuteller-Tragrahmen an den Außenrahmen gekoppelt. Der Streuteller ist also am Streuteller-Tragrahmen angebracht und der Streuteller-Tragrahmen ist an dem Außenrahmen angebracht.

Zum Neigen des Streuteller-Tragrahmens relativ zu dem Außenrahmen, und somit auch des Streutellers um die primäre Neigachse, ist eine Neigungseinstellvorrichtung vorgesehen, die bei Ansteuerung durch die Steuerungseinrichtung eine entsprechende Drehung des Streuteller-Tragrahmens gegenüber dem Außenrahmen durchführt. Die Neigungseinrichtung bewirkt das Neigen des Streuteller-Tragrahmens und des Streutellers um die primäre Neigachse mittels Veränderung einer Kopplung zwischen dem Außenrahmen und dem Streuteller-Tragrahmen. Diese Kopplung kann beispielsweise durch ein an dem Außenrahmen und dem Streuteller-Tragrahmen angebrachtes Stellglied ausgebildet sein, dessen einstellbare aktuelle Größe, z.B. eine geometrische Länge oder Winkellage eines Schrittmotors, den eingestellten Neigungswinkel um die primäre Neigachse bestimmt.

Zum Neigen des Streutellers um die sekundäre Neigachse, und somit relativ zu dem Streuteller-Tragrahmen und dem Außenrahmen, ist eine Neigungseinstellvorrichtung vorgesehen, die bei Ansteuerung durch die Steuerungseinrichtung eine entsprechende Drehung des Streutellers gegenüber dem Streuteller-Tragrahmen durchführt. Die Neigungseinrichtung bewirkt das Neigen des Streutellers um die sekundäre Neigachse mittels Veränderung einer Kopplung zwischen dem Streuteller-Tragrahmen und dem Streuteller. Diese Kopplung kann beispielsweise durch ein an dem Streuteller-Tragrahmen und dem Streuteller angebrachtes Stellglied ausgebildet sein, dessen einstellbare aktuelle Größe, z.B. eine geometrische Länge oder Winkellage eines Schrittmotors, den eingestellten Neigungswinkel um die sekundäre Neigachse bestimmt.

Diese Fortbildung ist aufgrund ihres einfachen strukturellen Aufbaus und der technisch einfach zu realisierenden Neigungseinstelleinrichtungen sehr vorteilhaft. Der Vorteil liegt insbesondere darin, dass die Neigung eines Streutellers auf einfache Art und Weise gleichzeitig um beide Achsen (primäre Neigachse und sekundäre Neigachse) erfolgen kann.

In einer Fortbildung der oben dargestellten Weiterbildung des erfindungsgemäßen Streufahrzeugs ist vorgesehen, dass die primäre Neigachse wenigstens eines Streutellers, vorzugweise beider Streuteller, relativ zu dem Außenrahmen ortsfest ist und/oder dass die sekundären Neigachsen relativ zu dem jeweiligen Streurahmen-Tragrahmen ortsfest sind. Die sekundären Neigachsen sind hingegen nicht ortsfest relativ zu dem Außenrahmen, sondern erfahren eine Neigbewegung gegenüber dem Außenrahmen bei Neigen des Streutellers um die primäre Achse.

In einer Fortbildung der oben dargestellten Weiterbildung des erfindungsgemäßen Streufahrzeugs ist vorgesehen, dass die primäre Neigachse und die sekundäre Neigachse eines jeweiligen neigbaren Streutellers zueinander orthogonal ausgerichtet sind.

Dadurch wird ein hinsichtlich der Steuerung einfaches Neigen des Streutellers um einen Neigungswinkel in einer beliebig wählbare Neigungsebene ermöglicht, Zugleich wird vermieden, dass die primäre Neigachse und die sekundäre Neigachse zumindest teilweise gleiche Richtungskomponenten aufweisen können, was zur einer möglichen anteiligen Aufhebung von Neigevorgängen um beide Neigachsen führen könnte. Daher können die Neigungseinstelleinrichtungen den Neigevorgang schnell und energetisch effizient durchführen.

In einer Fortbildung der oben dargestellten Weiterbildung des erfindungsgemäßen Streufahrzeugs ist vorgesehen, dass die primäre Neigachse und die sekundäre Neigachse eines jeweiligen neigbaren Streutellers einen Abstand zueinander von weniger als 30 cm, bevorzugt weniger als 20 cm, höchst vorzugsweise weniger als 15 cm aufweisen.

Mit einem möglichst geringen Abstand zwischen den Neigachsen eines jeweiligen Streutellers kann eine kompakte Bauform des Streuwerks erreicht werden.

In einer Fortbildung der oben dargestellten Weiterbildung des erfindungsgemäßen Streufahrzeugs ist vorgesehen, dass die primäre Neigachse und die sekundäre Neigachse eines jeweiligen neigbaren Streutellers in derselben Ebene liegen. Die primäre Neigachse und die sekundäre Neigachse haben somit einen gemeinsamen Schnittpunkt.

Auch wenn bei dieser Fortbildung die primäre Neigachse und die sekundäre Neigachse desselben Streutellers in derselben Ebene liegen, ist es nicht erforderlich, dass die Neigachsen mehrerer neigbarer Streuteller alle in ein und derselben Ebene liegen.

In einer Fortbildung der oben dargestellten Weiterbildung des erfindungsgemäßen Streufahrzeugs ist vorgesehen, dass entweder die primäre Neigachse oder die sekundäre Neigachse eines jeweiligen neigbaren Streutellers längs zur Fahrtrichtung des Streufahrzeugs angeordnet ist.

Auf diese Weise ist eine einfache Steuerung der Einstellvorrichtung möglich. Zudem kann ein Benutzer des Streufahrzeugs einen Ausfall einer Neigungseinstelleinrichtung schnell daran erkennen, dass der betroffene Streuteller nur noch quer oder längs zur Fahrtrichtung geneigt werden kann.

In einer Fortbildung der oben dargestellten Weiterbildung des erfindungsgemäßen Streufahrzeugs ist vorgesehen, dass die primäre Neigachse und/oder die sekundäre Neigachse mindestens eines neigbaren Streutellers um einen Winkel im Bereich von 5 bis 85 Grad, bevorzugt von 40 bis 50 Grad, zu der Fahrtrichtung des Streufahrzeugs angeordnet ist.

Diese Fortbildung ist besonders vorteilhaft, wenn die Neigungseinstelleinrichtungen eines Streutellers von ein und derselben Fahrzeugaußenseite einfach zugänglich sein sollen.

In einer Fortbildung der oben dargestellten Weiterbildung des erfindungsgemäßen Streufahrzeugs ist vorgesehen, dass mindestens einer der Streuteller-Tragrahmen mittels mindestens zwei Tragrahmen-Lagerstellen um die primäre Neigachse des Streutellers neigbar mit dem Außenrahmen verbunden ist, wobei die Tragrahmen-Lagerstellen auf zueinander gegenüberliegenden Seiten des Streuteller-Tragrahmens und entlang der primären Neigachse des Streutellers angeordnet sind. Bevorzugt sind für die neigbare Lagerung eines jeweiligen Streuteller-Tragrahmens genau zwei Tragrahmen-Lagerstellen an dem Außenrahmen angebracht. Die Tragrahmen-Lagerstellen sind beispielsweise als Drehlager ausgebildet.

Diese Fortbildung erlaubt eine besonders stabile und widerstandsfähige und zugleich neigbare Anbringung eines Streutellers-Tragrahmens an dem Außenrahmen.

In einer Fortbildung der oben dargestellten Weiterbildung des erfindungsgemäßen Streufahrzeugs ist vorgesehen, dass mindestens einer der Streuteller mittels mindestens zwei Streuteller-Lagerstellen um die sekundäre Neigachse des Streutellers neigbar mit seinem Streuteller-Tragrahmen verbunden ist, wobei die Streuteller-Lagerstellen auf zueinander gegenüberliegenden Seiten des Streutellers und entlang der sekundären Neigachse des Streutellers angeordnet sind. Bevorzugt sind für einen jeweiligen Streuteller genau zwei Streuteller-Lagerstellen an dem Streuteller-Tragrahmen angebracht. Die Streuteller-Lagerstellen sind beispielsweise als Drehlager ausgebildet.

Diese Fortbildung erlaubt eine besonders stabile und widerstandsfähige und zugleich neigbare Anbringung eines Streutellers an dem Streuteller-Tragrahmen.

In einer Fortbildung der oben dargestellten Weiterbildung des erfindungsgemäßen Streufahrzeugs ist vorgesehen, dass der Streuteller-Tragrahmen zumindest halbkreisartig, bevorzugt ringartig, von dem Außenrahmen umschlossen ist, und/oder dass der Streuteller zumindest halbkreisartig, bevorzugt ringartig, von dem Streuteller-Tragrahmen umschlossen ist. Für die halbkreisartige Umschließung hat der Außenrahmen bzw. der Streuteller-Tragrahmen in der Ebene, in der die primäre Neigachse bzw. die sekundäre Neigachse angeordnet ist, bevorzugt eine U-förmige, C-förmige oder sicherartige Form, wobei die beiden Tragrahmen-Lagerstellen bzw. Streuteller-Lagerstellen des Streutellers an den beiden (Schenkel)enden der halbkreisartigen Umschließungen angebracht sind.

Diese Fortbildung ermöglicht die Realisierung eines besonders stabilen und widerstandsfähigen und zugleich uneingeschränkt neigbaren Streutellers.

In einer Fortbildung der oben dargestellten Weiterbildung des erfindungsgemäßen Streufahrzeugs ist vorgesehen, dass mindestens einer der Streuteller-Tragrahmen nur mittels genau einer Tragrahmen-Lagerstelle um die primäre Neigachse des Streutellers neigbar mit Außenrahmen verbunden ist, wobei die Tragrahmen-Lagerstelle auf der primären Neigachse des Streutellers angeordnet ist.

Diese Fortbildung stellt ein Streufahrzeug mit besonders kompakt ausgebildeten neigbaren Streutellern bereit.

In einer Fortbildung der oben dargestellten Weiterbildung des erfindungsgemäßen Streufahrzeugs ist vorgesehen, dass mindestens einer der Streuteller nur mittels genau einer Streuteller-Lagerstelle um die sekundäre Neigachse des Streutellers neigbar mit seinem Streuteller-Tragrahmen verbunden ist, wobei die Streuteller-Lagerstelle auf der sekundären Neigachse des Streutellers angeordnet sind ist.

Auch diese Fortbildung stellt ein Streufahrzeug mit besonders kompakt ausgebildeten neigbaren Streutellern bereit. Die Kompaktheit kann nochmals gesteigert werden, wenn der jeweilige Streuteller nur mittels genau einer Streuteller-Lagerstelle an dem Streuteller-Tragrahmen neigbar angebracht ist, und zugleich der Streuteller-Tragrahmen nur mittels genau einer Tragrahmen-Lagerstelle an dem Außenrahmen neigbar angebracht ist.

In einer Fortbildung der dargestellten Weiterbildung des erfindungsgemäßen Streufahrzeugs ist vorgesehen, dass mindestens eine der Neigungseinstelleinrichtungen in eine Tragrahmen-Lagerstelle und/oder in eine Streuteller-Lagerstelle integriert ist.

Eine derartige Neigungseinstelleinrichtung kann beispielsweise als ein hydraulisch, elektrisch und/oder mechanisch angetriebenes Drehlager ausgebildet sein, mittels dessen eine darin aufgenommene Achswelle oder Achszapfen als Anschlussstück für den Streuteller-Tragrahmen oder den Streuteller gemäß dem für die Neigachse einzustellenden Neigungswinkel gedreht wird.

Auch diese Fortbildung stellt ein Streufahrzeug mit besonders kompakt ausgebildeten neigbaren Streutellern bereit.

In einer Weiterbildung des erfindungsgemäßen Streufahrzeugs ist vorgesehen, dass der Außenrahmen zumindest während des Düngematerial-Ausbringungsbetriebs relativ zu dem Fahrgestell ortsfest und lagefest ist. Auch wenn die Anbringungsposition und/oder Neigung des Außenrahmens an dem Fahrgestell des Streufahrzeugs - und damit auch möglicherweise die Neigung der am Außenrahmen angebrachten neigbaren Streuteller - verändert werden kann, so sieht die vorgestellte Erfindung bewusst vor, dass die Steuerungseinrichtung die Neigung der Streuteller während des Düngematerial-Ausbringungsbetriebs nur mittels der Neigungseinstelleinrichtungen, nicht aber mittels gesteuerter Veränderung der Anbringungsposition und/oder Neigung des Außenrahmens steuert.

In einer Weiterbildung des erfindungsgemäßen Streufahrzeugs ist vorgesehen, dass das Streuwerk heckseitig einen ersten in der linksseitigen Hälfte angeordneten neigbaren Streuteller und einen zweiten in der rechtsseitigen Hälfte angeordneten neigbaren Streuteller aufweist, und dass die Neigungswinkel und die Neigungsrichtungen dieser Streuteller unabhängig voneinander unter Steuerung durch die Steuerungseinrichtung einstellbar sind, einschließlich einer geneigten Stellung der beiden Streuteller mit parallelen Drehachsen.

In einer Weiterbildung des erfindungsgemäßen Streufahrzeugs ist vorgesehen, dass die Steuerungseinrichtung ausgebildet ist, während des Düngematerial-Ausbringungsbetriebs Messsensordaten von einem Sensor zum Messen einer Fahrzeugneigung und/oder einer Hangneigung der Agrarfläche und/oder einem Sensor zum Messen der Windgeschwindigkeit und/oder Windrichtung und/oder einem Fahrgeschwindigkeitssensor und/oder einem Geopositionssensor zu empfangen und die Neigungseinstelleinrichtungen unter Berücksichtigung der empfangenen Messsensordaten derart anzusteuern, dass das Düngematerial mit einer vorgegebenen Streubreite und/oder einer vorgegebenen Mengenverteilung auf die Agrarfläche ausgebracht wird.

Das Streufahrzeug gemäß dieser Weiterbildung ermöglicht eine erhebliche Steigerung der Genauigkeit der teilspezifischen Ausbringung des Düngematerials, wodurch die Qualität des Precision Farming erheblich gesteigert wird.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt ein Streufahrzeug in einer Seitenansicht;
- Fig. 2: zeigt das Streufahrzeug gemäß Fig. 1 in einer Ansicht von hinten;
- Fig. 3: zeigt eine Draufsicht auf den hinteren Teil eines Streufahrzeuges gemäß Fig. 1;
- Fig. 4: zeigt eine schematische Ansicht eines Teller-Streuwerks mit zwei neigbaren Streutellern (angedeutet) eines erfindungsgemäßen Streufahrzeugs in einer Draufsicht;
- Fig. 5: zeigt die linke Hälfte des Streuwerks gemäß Fig. 4 in einer Ansicht von hinten;
- Fig. 6: zeigt eine schematische Ansicht eines Teller-Streuwerks mit zwei neigbaren Streutellern (angedeutet) eines erfindungsgemäßen Streufahrzeugs mit unterschiedlich ausgerichteten Neigachsen in einer Draufsicht;
- Fig. 7: zeigt ein Teller-Streuwerk mit zwei neigbaren Streutellern eines erfindungsgemäßen Streufahrzeugs in einer perspektivischen Ansicht von schräg oben;
- Fig. 8: zeigt das Teller-Streuwerk gemäß Fig. 7 in einer perspektivischen Ansicht von schräg unten;
- Fig. 9: zeigt das Streuwerk gemäß Fig. 7 mit in Neutralstellung angeordneten Streutellern in einer Ansicht von hinten;
- Fig. 10: zeigt das Streuwerk gemäß Fig. 9 in einer Seitenansicht;
- Fig. 11: zeigt das Streuwerk gemäß Fig. 9 in einer Draufsicht;
- Fig. 12: zeigt das Streuwerk gemäß Fig. 9 in einer perspektivischen Ansicht;
- Fig. 13: zeigt das Streuwerk gemäß Fig. 7 mit nach vorne geneigten Streutellern in einer Ansicht von hinten;
- Fig. 14: zeigt das Streuwerk gemäß Fig. 13 in einer Seitenansicht;
- Fig. 15: zeigt das Streuwerk gemäß Fig. 13 in einer Draufsicht;
- Fig. 16: zeigt das Streuwerk gemäß Fig. 13 in einer perspektivischen Ansicht;
- Fig. 17: zeigt das Streuwerk gemäß Fig. 7 mit nach hinten geneigten Streutellern in einer Ansicht von hinten;
- Fig. 18: zeigt das Streuwerk gemäß Fig. 17 in einer Seitenansicht;
- Fig. 19: zeigt das Streuwerk gemäß Fig. 17 in einer Draufsicht;
- Fig. 20: zeigt das Streuwerk gemäß Fig. 17 in einer perspektivischen Ansicht;
- Fig. 21: zeigt das Streuwerk gemäß Fig. 7 mit nach vorne geneigtem linken Streuteller und nach hinten geneigtem rechten Streuteller in einer Ansicht von hinten;
- Fig. 22: zeigt das Streuwerk gemäß Fig. 21 in einer Seitenansicht;
- Fig. 23: zeigt das Streuwerk gemäß Fig. 21 in einer Draufsicht;
- Fig. 24: zeigt das Streuwerk gemäß Fig. 21 in einer perspektivischen Ansicht;
- Fig. 25: zeigt das Streuwerk gemäß Fig. 7 mit nach links geneigten Streutellern;
- Fig. 26: zeigt das Streuwerk gemäß Fig. 7 mit nach rechts geneigten Streutellern;
- Fig. 27: zeigt das Streuwerk gemäß Fig. 7 mit zur Fahrzeugmitte geneigten Streutellern;
- Fig. 28: zeigt das Streuwerk gemäß Fig. 7 mit nach außen geneigten Streutellern.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung eines Streufahrzeuges, die der Anordnung eines Streufahrzeuges im Betriebsmodus entspricht.

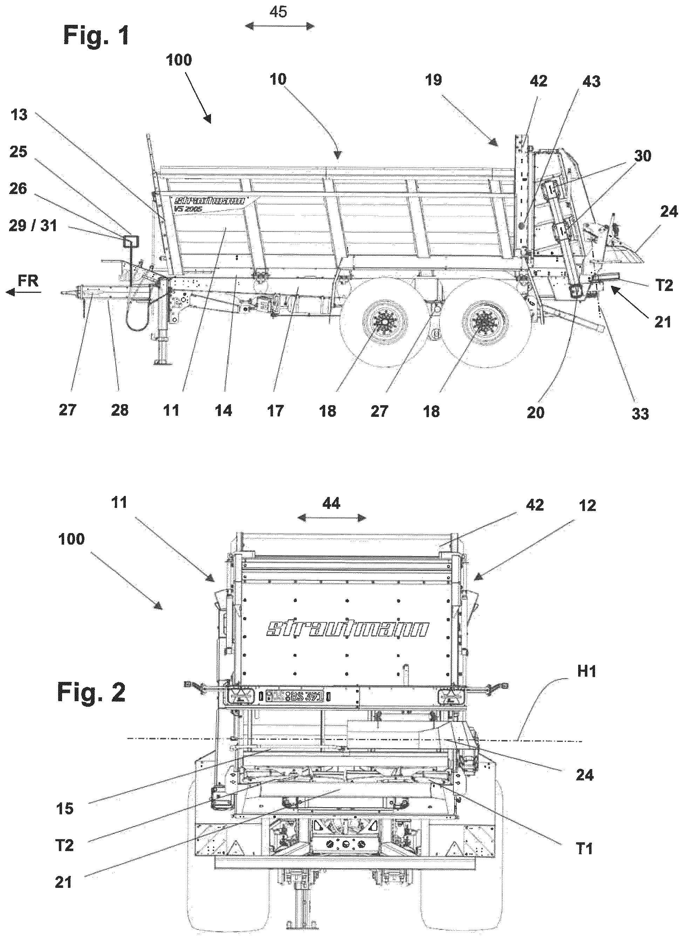

Die Figuren 1 und 2 zeigen ein als Stalldungstreuer ausgebildetes Streufahrzeug 100, das im Arbeitseinsatz von einem (nicht veranschaulichten) Zugfahrzeug, beispielsweise einem Traktor, gezogen wird. Das Streufahrzeug 100 weist ein Fahrgestell 17 mit einer Deichsel 28 und zwei Achsen 18 auf. Auf dem Fahrgestell 17 befindet sich ein Laderaum 10 zur Aufnahme von auszubringendem Streugut. Der Laderaum 10 wird zu seinen Seiten hin durch eine Stirnwand 13, Seitenwände 11 und 12 sowie einen vor dem Streuwerk 19 befindlichen Stauschieber 42 begrenzt.

Der Laderaum 10 ist über eine Wiegeeinrichtung 27 an das Fahrgestell 17 gekoppelt. Die Wiegeeinrichtung 27 erfasst somit das Eigengewicht des Laderaums 10 und der mit dem Laderaum 10 verbundenen Komponenten, insbesondere des Streuwerks 19. Wird ein so ausgestattetes Streufahrzeug 100 im unbeladenen Zustand auf Null tariert, so weist eine der Wiegeeinrichtung 27 zugeordnete Anzeigeeinrichtung nach der Beladung das Gewicht des Streuguts aus. Als Gewichts-Anzeigeeinrichtung ist ein Display vorgesehen, welches im dargestellten Ausführungsbeispiel in eine Steuerungseinrichtung 25 integriert ist.

Die Steuerungseinrichtung 25 umfasst einen Datenspeicher 26 und Datenschnittstellen 29 und 31, mittels derer Daten beispielsweise per USB-Stick und/oder drahtlos in die Steuerungseinrichtung 25 eingebbar und auslesbar sind. In der Steuerungseinrichtung oder einem zusätzlichen Gerät, beispielsweise einem mit der Steuerungseinrichtung über eine Leitung oder eine Funkverbindung gekoppelten Bediengerät, kann ein Display zur Eingabe von Steuerbefehlen vorgesehen sein.

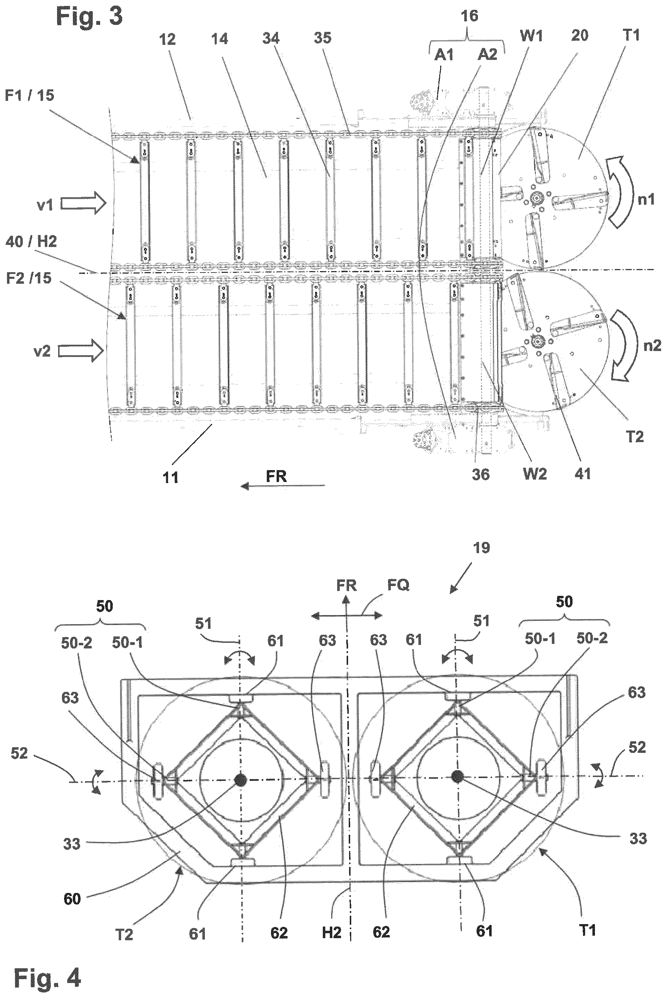

Der Laderaum 10 weist einen Boden 14 mit einer Transporteinrichtung 15 (vgl. Fig. 3) auf. Im dargestellten Ausführungsbeispiel umfasst die Transporteinrichtung 15 zwei Förderstränge F1 und F2, die durch den Boden 14 umlaufende Kratzböden gebildet werden. Die Transporteinrichtung 15 führt im Arbeitseinsatz das im Laderaum 10 befindliche Streugut dem Streuwerk 19 zu. Dabei ist die Menge des dem Streuwerk 19 zugeführten Streuguts von der Höheneinstellung des Stauschiebers 42 abhängig.

Das Streuwerk 19 umfasst zwei horizontal angeordnete Streuwalzen 30 sowie zwei Streuteller T1 und T2. Die Streuwalzen 30 zerkleinern und lösen das Streugut 32 auf, so dass es über eine am Boden 14 angeordnete hintere Kante 20 auf die Streuteller T1 und T2 fällt. Die Streuteller T1 und T2 sind auf einem Streutisch 21 angeordnet und rotieren im Arbeitseinsatz um eine Drehachse 33. Die Rotation der Streuteller T1 und T2 erfolgt je nach dem Anforderungsprofil an ein gewünschtes Streubild wahlweise im oder gegen den Uhrzeigersinn. Die rotierenden Streuteller T1, T2 beschleunigen das auf sie fallende Streugut, werfen es nach hinten und zur Seite ab und erzeugen hinter dem Streufahrzeug 100 einen Streuteppich. Die Breite und Dicke (kg/m²) ist durch Einstellung der insofern relevanten Streuparameter wie Förderstrang-Geschwindigkeit, Grenzstreueinrichtungs-Einstellung, Streuteller-Drehrichtung und -drehzahl sowie den Neigungswinkel der Streuteller T1, T2 regelbar ist.

Oberhalb des Streuteller T2 ist eine Grenzstreueinrichtung 24 angeordnet. Die Grenzstreueinrichtung 24 ist in den Auswurfbereich des Streutellers T2 einklappbar und ermöglicht eine mechanische Begrenzung des Streuwinkels. Im dargestellten Ausführungsbeispiel ist lediglich dem Streuteller T2 eine Grenzstreueinrichtung 24 zugeordnet. Analog zum Streuteller T2 ist auch der Streuteller T2 mit einer Grenzstreueinrichtung 24 ausrüstbar. Alternativ zu der dargestellten Grenzstreueinrichtung 24, die einen Viertelkreis abdeckt, könnte auch eine anders ausgeführte Grenzstreueinrichtung vorgesehen sein. Beispielsweise könnte die Grenzstreueinrichtung in Form eines Leitblechs ausgeführt sein, welches den Streubereich auf einen vordefinierten, jedoch variabel einstellbaren, Auswurfwinkel begrenzt.

Figur 3 zeigt eine Draufsicht auf den hinteren Bereich des Streufahrzeuges 100. Zur Verbesserung der Übersichtlichkeit sind die horizontalen Streuwalzen 30 und die Rahmen- und Schutzteile des Streuwerks 19 in Figur 3 nicht dargestellt.

Der Boden 14 wird im dargestellten Ausführungsbeispiel von zwei Fördersträngen F1 und F2, die gemeinsam die Transporteinrichtung 15 bilden, umlaufen. Die Förderstränge F1 und F2 sind als Kratzböden ausgeführt. Die Kratzböden werden in bekannter Weise durch Ketten 34 und die Ketten verbindende Förderleisten 35 gebildet.

Der Förderstrang F1 wird an seinem hinteren Ende, also im Bereich des Streuwerks 19 von einer Antriebswelle W1 und zwei darauf gelagerten Taschenkettenrädern 36 angetrieben. Die Antriebswelle W1 wird von einem Antrieb A1, bei dem es sich im dargestellten Ausführungsbeispiel um einen Hydraulikmotor handelt, angetrieben. Im vorderen Bereich des Streufahrzeuges 100, also im Bereich der Stirnwand 13, wird der Förderstrang F1 von einer in den Figuren nicht dargestellten Umlenkwelle um den Boden 14 geleitet.

Der Aufbau und der Antrieb des Förderstrangs F2 ist analog zu dem beschriebenen Aufbau und Antrieb des Förderstrangs F1 ausgeführt. Die beiden Antriebe A1 und A2 sind an den beiden Laderaum-Außenseiten angeordnet und bilden gemeinsam eine Antriebseinrichtung 16 des Streufahrzeuges. Wie die Figuren 2 und 3 zeigen ergibt sich durch die außenseitige Anordnung der Getriebe A1 und A2 im Bereich der Fahrzeug-Längsachse 40 ein minimaler Abstand zwischen den Fördersträngen F1 und F2.

Die beiden Förderstränge F1 und F2 sind unabhängig voneinander und mit gleichen oder unterschiedlichen Geschwindigkeiten v1, v2 antreibbar.

Im dargestellten Ausführungsbeispiel sind auch die Streuteller T1 und T2 einzeln und mit unterschiedlichen Drehzahlen n1 und n2 - und damit auch mit unterschiedlichen Drehgeschwindigkeiten - antreibbar.

Der Boden 14 überragt im Bereich seines Hecks die Streuteller T1 und T2 teilweise. Das von den Fördersträngen F1 und F2 in Richtung Streuwerk 19 geförderte Streugut 32 bildet einen Streugutstrom, welcher über die hintere Kante 20 des Bodens 14 von oben auf die Streuteller T1 und T2 fällt.

Bei dem in Fig. 3 dargestellten Ausführungsbeispiel ist die Drehrichtung der Streuteller T1 und T2 entgegengesetzt zueinander und jeweils nach außen gerichtet.

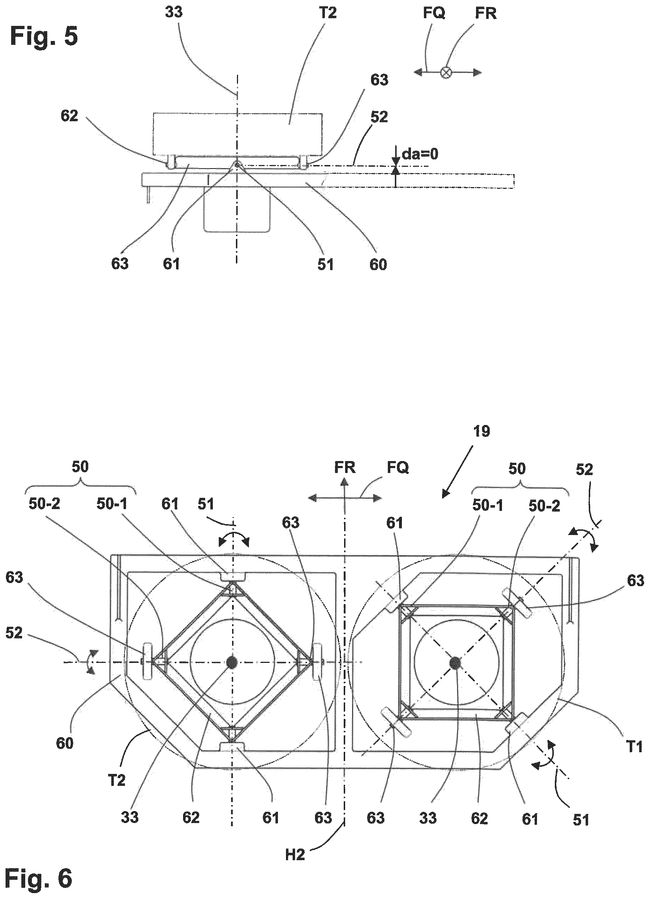

Die Figuren 4 und 5 zeigen schematische Ansichten eines Teller-Streuwerks 19 mit zwei neigbaren Streutellern T1, T2 eines erfindungsgemäßen Streufahrzeugs 100. Zur besseren Veranschaulichung der Schwenkkinematik sind die Streuteller T1 und T2 in diesen Figuren nur angedeutet.

Fig. 4 zeigt das Teller-Streuwerk 19 in einer Draufsicht. Das Teller-Streuwerk 19 weist einen Außenrahmen 60 auf, an dem in der linken Hälfte der Streuteller T2 mit Drehachse 33 und in der rechten Hälfte der Streuteller T1 mit Drehachse 33 angebracht sind. Die Streuteller T1 und T2 sind gleich angeordnet, so dass im Folgenden nur der Streuteller T1 mit seinen zugehörigen Neigungseinrichtungen 50-1, 50-2 detailliert erläutert wird. Bei den separaten Neigungseinstellungseinrichtungen 50-1 und 50-2 handelt es sich um einzelne Vorrichtungen, die gemeinsam eine Neigungseinstelleinrichtung 50 eines Streutellers T1 oder T2 bilden. Mittels einer Neigungseinstelleinrichtung 50 sind die Streuteller T1 und T2 gegenüber einer horizontalen Ebene in beliebige Winkelpositionen schwenkbar.

Entlang einer primären Neigachse 51, die längs bzw. parallel zur Fahrtrichtung FR ausgerichtet ist, befinden sich an gegenüberliegenden Enden des Außenrahmens 60 insgesamt zwei Tragrahmen-Lagerstellen 61. Mittels dieser Tragrahmen-Lagerstellen 61 ist ein Streuteller-Tragrahmen 62 um die primäre Neigachse 51 drehbar an dem Außenrahmen 60 angebracht. Mittels einer in einer der Tragrahmen-Lagerstellen 61 integrierten Neigungseinstelleinrichtung 50-1 kann der Steuerteller-Tragrahmen 62 um die primäre Neigachse 51 auf einen für diese Neigachse vorbestimmten Neigungswinkel eingestellt werden. Der Wert des einzustellenden vorbestimmten Neigungswinkels wird der Neigungseinstelleinrichtung 50-1 durch die in Fig. 1 dargestellte Steuerungseinrichtung 25 vorgegeben.

An dem Streuteller-Tragrahmen 62 ist wiederum der eigentliche Steuerteller T1 mittels zweier Streuteller-Lagerstellen 63 um eine sekundäre Neigachse 52 neigbar angebracht. Mittels einer in einer der Streuteller-Lagerstellen 63 integrierten Neigungseinstelleinrichtung 50-2 kann der eigentliche Streuteller T1 um die sekundäre Neigachse 52 auf einen für diese Neigachse vorbestimmten Neigungswinkel eingestellt werden. Der Wert des einzustellenden vorbestimmten Neigungswinkels wird der Neigungseinstelleinrichtung 50-2 durch die in Fig. 1 dargestellte Steuerungseinrichtung 25 vorgegeben. Die sekundäre Neigachse 52 ist orthogonal zu der längs bzw. parallel zur Fahrtrichtung FR verlaufenden primären Neigachse 51 und somit in eine Richtung FQ ausgerichtet, die quer zur Fahrtrichtung FR verläuft. Beide Neigachsen 51 und 52 befinden sich jeweils in einer horizontalen bzw. waagerechten Ebene. Die durch die Neigungseinstelleinrichtungen 50-1 und 50-2 durchgeführten Drehbewegungen um die primäre Neigachse 51 und die zu dieser orthogonalen sekundären Neigachse 52 resultieren kombiniert in einer Neigung des Streutellers T1 um einen vorbestimmten Neigungswinkel gegenüber der Horizontalen in einer vorbestimmten Neigungsrichtung.

Wie aus Figur 4 ersichtlich, umschließt der Außenrahmen 60 beide Streuteller-Tragrahmen jeweils ringförmig, und jeder Streuteller-Tragrahmen 62 umschließt den daran angebrachten Streuteller T1 bzw. T2 ringförmig.

Figur 5 zeigt die linke Hälfte des Streuwerks 19 gemäß Fig. 4 in einer Ansicht von hinten und verdeutlicht den Begriff des Abstands zwischen der primären Neigachse 51 und der sekundäre Neigachse 52. Dieser Abstand ist in Figur 5 mit dem Bezugszeichen da versehen. Beim dargestellten Ausführungsbeispiel handelt es sich um eine bevorzugte Ausführungsform mit in derselben Ebene angeordneter primärer Neigachse 51 und die sekundärer Neigachse 52. Da beide Neigachsen 51, 52 in derselben Ebene liegen und sich somit in einem Punkt schneiden, beträgt der Abstand da hier 0 mm. Zudem kann die Drehebene bzw. die Drehachse 33 des Streuteller so angeordnet sein, dass die Drehachse 33 durch den Schnittpunkt der primären Neigachse 51 und der sekundären Neigachse 52 verläuft, was ebenfalls für die in den Figuren veranschaulichten Ausführungsformen zutrifft.

Damit die Streuteller T1 und T2 auf ihrer Oberseite möglichst viel Streugut aufnehmen können, das ihnen über die Transportvorrichtung 15 aus dem Laderaum 10 zugeführt wird, sind die Streuteller T1 und T2 des in Fig. 4 schematisch veranschaulichten Streuwerks in einer neutralen Lage waagerecht angeordnet, so dass ihre Drehachsen 33 senkrecht zur Horizontalebene ausgerichtet sind.

Figur 6 zeigt eine schematische Ansicht eines Teller-Streuwerks 19 mit zwei neigbaren Streutellern T1, T2 eines erfindungsgemäßen Streufahrzeugs mit unterschiedlich ausgerichteten Neigachsen 51 und 52 in einer Draufsicht. Analog zu den Figuren 4 und 5 sind die Streuteller T1 und T2 auch in Fig. 6 lediglich angedeutet. Im Vergleich zu dem Streuteller T2 des in Fig. 4 veranschaulichten Streuwerks 19 ist der in Fig. 6 dargestellte Streuteller T2 mit um 90 Grad versetzten Neigachsen 51, 52 angeordnet, so dass seine primäre Neigachse 51 quer zur Fahrtrichtung und seine sekundäre Neigachse 51 längs zur Fahrtrichtung FR ausgerichtet sind. Die primäre Neigachse 51 und die sekundäre Neigachse 52 des Streutellers T1 in Fig.5 sind jeweils um 45 Grad versetzt zu der Fahrtrichtung FR angeordnet, was einen Zugang von der rechten Fahrzeugseite zu den für den Streuteller T1 bereitgestellten Neigungseinstelleinrichtungen 50-1 und 50-2 des Streutellers T1 beispielsweise für Wartungszwecke erleichtert. Obwohl für die Streuteller T1 und T2 des in Fig. 6 veranschaulichten Streuwerks 19 unterschiedlich angeordnete primäre und sekundäre Neigachsen vorgesehen sind, kann für jeden der Streuteller T1 und T2 von Fig. 4 und Fig. 6 derselbe Neigungswinkel in derselben Neigungsrichtung eingestellt werden. Es ist also auch möglich ein Streuwerk mit zwei Streutellern T1 und T2 auszustatten, die beide jeweils um 45° verssetzt zur Fahrtrichtung FR angeordnet sind, so dass die Stelleinrichtungen 50-1 und 50-2 beider Streuteller T1, T2 für Wartungszwecke jeweils von den Außenseiten des Streufahrzuges 100 zugänglich sind.

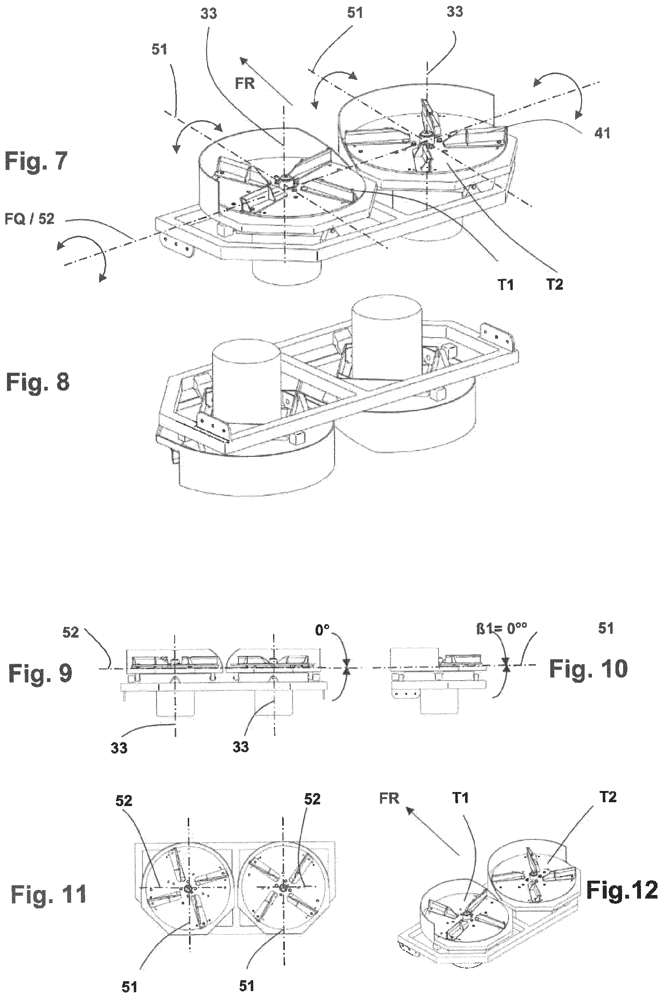

Figur 7 zeigt ein Teller-Streuwerk mit zwei neigbaren Streutellern T1 und T2 eines erfindungsgemäßen Streufahrzeugs 100 in einer perspektivischen Ansicht von schräg oben, und Figur 8 zeigt dieses Teller-Streuwerk von schräg unten. Bei dem in Figuren 7 und 8 gezeigten Teller-Streuwerk handelt es sich um eine realitätsnähere Darstellung des in Fig. 4 aus Gründen der verständlicheren Erläuterung der Merkmale schematisch und realitätsferner dargestellten Teller-Streuwerks 19. In den Figuren 7 und 8 sind zudem Antriebseinrichtungen 65 für die Streuteller T1 und T2 angedeutet. Als Antriebseinrichtungen 65 können mechanische, hydraulische oder elektrische Antriebe vorgesehen sein.

Die Figuren 9 bis 28 veranschaulichen einige Beispiele unterschiedlicher Einstellungen der Streuteller T1 und T2. Gemeinsam ist diesen Beispielen, dass sie sich mittels Schwenken der Streuteller T1 und T2 um die primäre Neigachse 51 und/oder die sekundäre Neigachse 52 realisieren lassen.

Die Figuren 9 bis 12 zeigen das in Figur 7 abgebildete Streuwerk mit in Neutralstellung angeordneten Streutellern aus verschiedenen Ansichtsperspektiven. Die Streuteller T1 und T2 sind somit in einem Schwenkwinkel β1 von 0° gegenüber einer horizontalen Ebene verschwenkt.

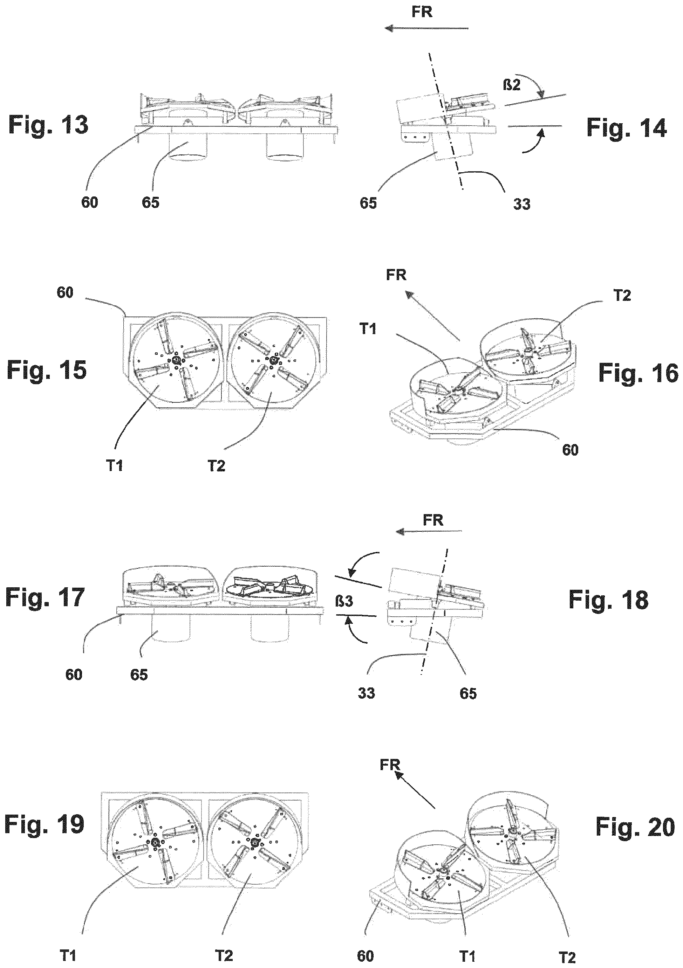

Die Figuren 13 bis 16 zeigen das in Figur 7 abgebildete Streuwerk mit in Fahrtrichtung FR um einen Winkel β2 nach vorne geneigten Streutellern TG1 und T2 aus verschiedenen Ansichtsperspektiven.

Die Figuren 17 bis 20 zeigen das in Figur 7 abgebildete Streuwerk mit in Fahrtrichtung FR um einen Winkel β3 nach hinten geneigten Streutellern T1, T2 aus verschiedenen Ansichtsperspektiven.

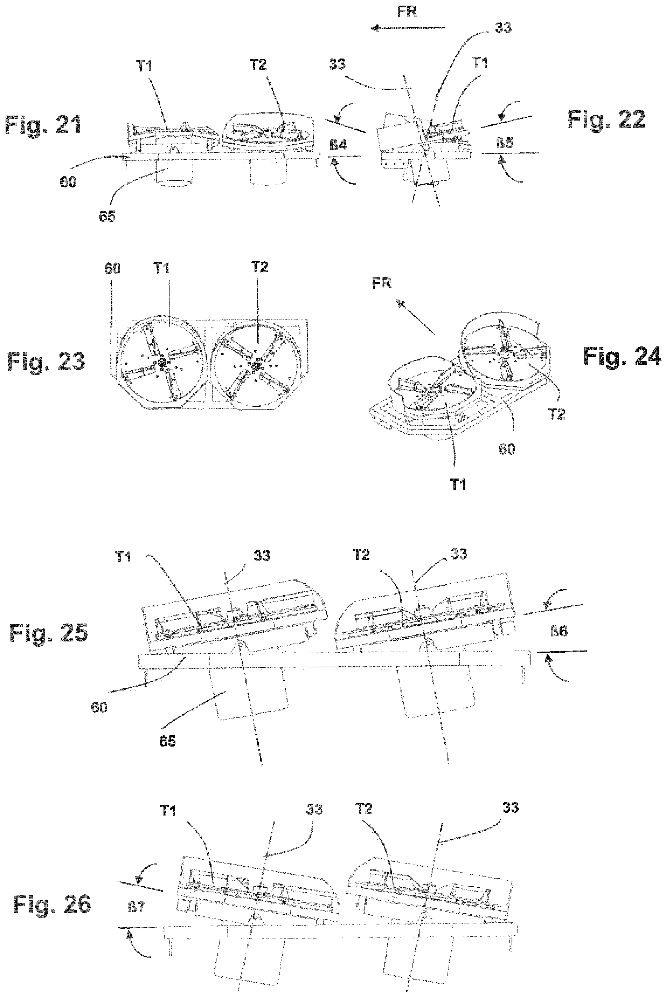

Die Figuren 21 bis 24 zeigen das in Figur 7 abgebildete Streuwerk aus verschiedenen Ansichtsperspektiven, wobei der linke Streuteller T1 um einen Winkel β5 nach vorne und der rechte Streuteller T2 um einen Winkel β6 nach hinten geneigt ist.

Figur 25 zeigt das in Figur 7 abgebildete Streuwerk mit in Fahrtrichtung FR einheitlich nach links geneigten Streutellern T1, T2.

Figur 26 zeigen das in Figur 7 abgebildete Streuwerk mit in Fahrtrichtung FR einheitlich nach rechts geneigten Streutellern T1, T2.

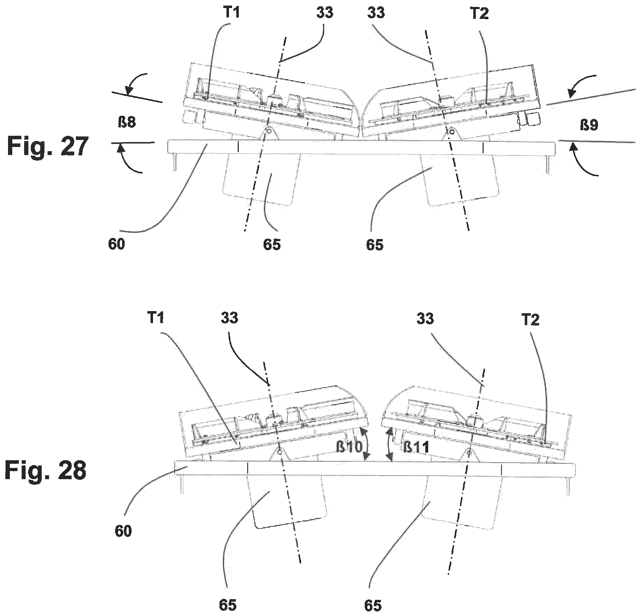

Fig. 27 zeigt das in Figur 7 abgebildete Streuwerk mit nach innen um die Winkel ß8 und ß9, also zueinander geneigten, Streutellern T1 und T2, wodurch die Wurfweite des Streuwerks aufgrund des bogenförmigen Abwurfs im Vergleich zu einer waagerechten Stellung der Streuteller T1, T2 erhöht wird.

Figur 28 zeigt das in Figur 7 abgebildete Streuwerk mit nach außen um die Winkel β10 und ß11 geneigten Streutellern T1 und T2, wodurch die Wurfweite des Streuwerks im Vergleich zu einer waagerechten Stellung der Streuteller T1, T2 verringert wird.

### Bezugszeichenliste

- 10: Laderaum
- 11: Seitenwand
- 12: Seitenwand
- 13: Stirnwand
- 14: Boden
- 15: Transporteinrichtung
- 16: Antriebseinrichtung
- 17: Fahrgestell
- 18: Achse
- 19: Streuwerk
- 20: hintere Kante (von 15)
- 21: Streutisch
- 23: -
- 24: Grenzstreueinrichtung
- 25: Steuerungseinrichtung
- 26: Datenspeicher
- 27: Wiegeeinrichtung
- 28: Deichsel
- 29: Daten-Schnittstelle
- 30: Streuwalze
- 31: Daten-Schnittstelle
- 33: Drehachse (von T1, T2)
- 34: Kette
- 35: Förderleiste
- 36: Taschenkettenrad
- 40: Längsachse (von 100)
- 41: Wurfschaufel
- 42: Stauschieber
- 43: Sensor (für 42)
- 44: Fahrzeugquerrichtung
- 45: Fahrzeuglängsrichtung
- 50: Neigungseinstelleinrichtung
- 50-1: Neigungseinstelleinrichtung der primären Neigachse
- 50-2: Neigungseinstelleinrichtung der sekundären Neigachse
- 51: primäre Neigachse
- 52: sekundäre Neigachse
- 60: Außenrahmen
- 61: Tragrahmen-Lagerstelle
- 62: Streuteller-Tragrahmen
- 63: Streuteller-Lagerstelle
- 65: Antriebseinrichtung (für T1, T2)
- 70: -
- 100: Streufahrzeug

- A1: Einzelantrieb
- A2: Einzelantrieb
- da: Abstand zwischen primärer und sekundärer Neigachse
- F1: Förderstrang
- F2: Förderstrang
- FQ: Querrichtung
- FR: Fahrtrichtung
- H1: horizontale Linie (in Fahrzeugquerrichtung)
- H2: horizontale Linie (in Fahrzeuglängsrichtung)
- n1: Drehzahl (von T1)
- n2: Drehzahl (von T2)
- T1: Streuteller
- T2: Streuteller
- V1: Geschwindigkeit (von F1)
- V2: Geschwindigkeit (von (F2)
- W1: Antriebswelle (von F1)
- W2: Antriebswelle (von F2)

- ß1-ß11: Winkel

## Patentansprüche

1. Landwirtschaftliches Streufahrzeug (100) umfassend:
- einen Laderaum (10) zur Aufnahme des Düngematerials, welcher zwei Seitenwände (11, 12), eine Stirnwand (13) und einen Boden (14) mit einer Transporteinrichtung (15) zum Transportieren des Düngematerials zu einem heckseitig angebrachten Streuwerk (19) umfasst;
- eine Antriebseinrichtung (16) für die Transporteinrichtung (15);
- ein Fahrgestell (17) mit wenigstens einer Fahrzeugachse (18); und
- das heckseitig angebrachte Streuwerk (19), wobei das Streuwerk (19) Streuteller (T1, T2) umfasst, die seitlich nebeneinander und zur Aufnahme des von der Transporteinrichtung (15) zu dem Streuwerk (19) transportierten Düngematerials auf ihrer Oberseite angeordnet sind, wobei die Streuteller (T1, T2) um ihre jeweilige Drehachse (33) durch eine Streutellerantriebseinrichtung in Drehung versetzbar sind, und ausgebildet sind, während sie in Drehung versetzt sind, das auf ihrer Oberseite aufgenommene Düngematerial von dem Streufahrzeug auf eine Agrarfläche wegzuschleudern, wobei eine Neigung der Streuteller (T1, T2) jeweils gegenüber einer Horizontalen (H2) quer zur Fahrtrichtung (FR) des Streufahrzeugs einstellbar ist,
**dadurch gekennzeichnet, dass**
- das Streufahrzeug (100) als Anhänger oder Selbstfahrer ausgebildet und zur Ausbringung von organischem Düngematerial, wie beispielsweise Stalldung, Kompost, Bioklärschlamm, organischem Dünger, Laub oder Gärsubsubstarten vorgesehen ist,
- das Streuwerk (19) ferner zwei horizontal angeordnete Streuwalzen (30) und einen unterhalb der Streuwalzen (30) angeordneten Außenrahmen (60) umfasst, an dem die Streuteller (T1, T2) auch gegenüber einer Horizontalen (H1) in Fahrtrichtung (FR) in eine beliebige Neigungsrichtung neigbar angebracht sind,
- das Streuwerk (19) Neigungseinstelleinrichtungen (50, 50-1, 50-2) aufweist, durch welche für jeden dieser neigbaren Streuteller (T1, T2) während eines Düngematerial-Ausbringungsbetriebs des Streufahrzeugs (100) ein individueller Neigungswinkel des Streutellers gegenüber der Horizontalen (H1) und der Horizontalen (H2) einstellbar ist,
- eine individuelle beliebig wählbare Neigungsrichtung der Streuteller (T1) und/oder (T2) steuerbar einstellbar ist, und
- dass das Streufahrzeug (100) mit einer Steuerungseinrichtung (25) zum Steuern der Neigungseinstelleinrichtungen (50, 50-1, 50-2) während des Düngematerial-Ausbringungsbetriebs versehen und/oder koppelbar ist.

2. Streufahrzeug (100) nach Anspruch 1, **dadurch gekennzeichnet, dass** mindestens einer der neigbaren Streuteller (T1, T2) um eine primäre Neigachse (51) und eine sekundäre Neigachse (52) relativ zu dem Außenrahmen (60) neigbar ist, wobei die primäre Neigachse (51) und die sekundäre Neigachse (52) eines jeweiligen Streutellers (T1, T2) nicht parallel zueinander verlaufen, und wobei eine Drehbewegung des Streutellers (T1, T2) nur um die primären Neigachse (51) zwangsweise eine der Drehbewegung entsprechende Lageänderung der sekundären Neigachse (52) relativ zu dem Außenrahmen (60) bewirkt, wohingegen die primäre Neigachse (51) bei einer Drehbewegung des Streutellers (T1, T2) nur um die sekundäre Neigachse (52) ortsfest relativ zu dem Außenrahmen (60) verbleibt.

3. Streufahrzeug (100) nach Anspruch 2, **dadurch gekennzeichnet, dass** das Streuwerk (19) für einen jeweiligen neigbaren Streuteller (T1, T2) einen jeweiligen Streuteller-Tragrahmen (62) aufweist, der um die primäre Neigachse (51) des Streutellers (T1, T2) neigbar an dem Außenrahmen (60) angebracht ist, und dass der Streuteller (T1, T2) um die sekundäre Neigachse (52) neigbar an dem Streuteller-Tragrahmen (62) angebracht ist.

4. Streufahrzeug (100) nach Anspruch 2 oder 3, **dadurch gekennzeichnet, dass** die primären Neigachsen (51) relativ zu dem Außenrahmen (60) ortsfest sind, und/oder dass die sekundären Neigachsen (52) relativ zu dem jeweiligen Streurahmen-Tragrahmen (62) ortsfest sind.

5. Streufahrzeug (100) nach einem der Ansprüche 2 bis 4, **dadurch gekennzeichnet, dass** die primäre Neigachse (51) und die sekundäre Neigachse (52) eines jeweiligen neigbaren Streutellers (T1, T2) zueinander orthogonal ausgerichtet sind.

6. Streufahrzeug (100) nach Anspruch 2 bis 5, **dadurch gekennzeichnet, dass** die primäre Neigachse (51) und die sekundäre Neigachse (52) eines jeweiligen neigbaren Streutellers (T1, T2) einen Abstand (da) zueinander von weniger als 30 cm, vorzugsweise bevorzugt weniger als 20 cm, höchst vorzugsweise weniger als 15 cm aufweisen.

7. Streufahrzeug (100) nach einem der Ansprüche 2 bis 6, **dadurch gekennzeichnet, dass** die primäre Neigachse (51) und die sekundäre Neigachse (52) eines jeweiligen neigbaren Streutellers (T1, T2) in derselben Ebene liegen oder parallel zur Fahrtrichtung (FR) des Streufahrzeugs angeordnet ist.

8. Streufahrzeug (100) nach einem der Ansprüche 2 bis 7, **dadurch gekennzeichnet, dass** die primäre Neigachse (51) und/oder die sekundäre Neigachse (52) mindestens eines neigbaren Streutellers (T1, T2) um einen Winkel im Bereich von 5 bis 85 Grad, bevorzugt von 40 bis 50 Grad, zu der Fahrtrichtung (FR) des Streufahrzeugs angeordnet ist.

9. Streufahrzeug (100) nach einem der Ansprüche 2 bis 8, **dadurch gekennzeichnet, dass** mindestens einer der Streuteller-Tragrahmen (62) mittels mindestens zwei Tragrahmen-Lagerstellen (61) um die primäre Neigachse (51) des Streutellers neigbar mit dem Außenrahmen (60) verbunden ist, wobei die Tragrahmen-Lagerstellen (61) auf zueinander gegenüberliegenden Seiten des Streuteller-Tragrahmens (62) und entlang der primären Neigachse (51) des Streutellers angeordnet sind.

10. Streufahrzeug (100) nach einem der Ansprüche 2 bis 8, **dadurch gekennzeichnet, dass** mindestens einer der Streuteller (T1, T2) mittels mindestens zwei Streuteller-Lagerstellen (63) um die sekundäre Neigachse (52) des Streutellers neigbar mit seinem Streuteller-Tragrahmen (62) verbunden ist, wobei die Streuteller-Lagerstellen (63) auf zueinander gegenüberliegenden Seiten des Streutellers (T1, T2) und entlang der sekundären Neigachse (52) des Streutellers angeordnet sind.

11. Streufahrzeug (100) nach Anspruch 9 oder 10, **dadurch gekennzeichnet, dass** der Streuteller-Tragrahmen (62) zumindest halbkreisartig, bevorzugt ringartig, von dem Außenrahmen (60) umschlossen ist, und/oder dass der Streuteller (T1, T2) zumindest halbkreisartig, bevorzugt ringartig, von dem Streuteller-Tragrahmen (62) umschlossen ist.

12. Streufahrzeug (100) nach einem der Ansprüche 2 bis 11 **dadurch gekennzeichnet, dass** mindestens einer der Streuteller-Tragrahmen (62) nur mittels genau einer Tragrahmen-Lagerstelle (61) um die primäre Neigachse (51) des Streutellers neigbar mit dem Außenrahmen (60) verbunden ist, wobei die Tragrahmen-Lagerstelle (61) auf der primären Neigachse (51) des Streutellers angeordnet ist.

13. Streufahrzeug (100) nach einem der Ansprüche 2 bis 12, **dadurch gekennzeichnet, dass** mindestens einer der Streuteller (T1, T2) nur mittels genau einer Streuteller-Lagerstelle (63) um die sekundäre Neigachse (52) des Streutellers neigbar mit seinem Streuteller-Tragrahmen (62) verbunden ist, wobei die Streuteller-Lagerstelle (63) auf der sekundären Neigachse (52) des Streutellers angeordnet ist.

14. Streufahrzeug (100) nach einem der Ansprüche 9bis 13, **dadurch gekennzeichnet, dass** mindestens eine der Neigungseinstelleinrichtungen (50, 50-1, 50-2) in eine Tragrahmen-Lagerstelle (61) und/oder in eine Streuteller-Lagerstelle (63) integriert ist.

15. Streufahrzeug (100) nach einem der Ansprüche 1 bis 14, **dadurch gekennzeichnet, dass** das Streuwerk (19) heckseitig einen ersten in der linksseitigen Hälfte angeordneten neigbaren Streuteller (T2) und einen zweiten in der rechtsseitigen Hälfte angeordneten neigbaren Streuteller (T1) aufweist, und dass die Neigungswinkel und die Neigungsrichtungen dieser Streuteller unabhängig voneinander unter Steuerung durch die Steuerungseinrichtung (25) einstellbar sind, einschließlich einer geneigten Stellung der beiden Streuteller mit parallelen Drehachsen (33) .

16. Streufahrzeug (100) nach einem der Ansprüche 1 bis 15, **dadurch gekennzeichnet, dass** die Steuerungseinrichtung (25) ausgebildet ist, während des Düngematerial-Ausbringungsbetriebs Messsensordaten von einem Sensor zum Messen einer Fahrzeugneigung und/oder einer Hangneigung der Agrarfläche und/oder einem Sensor zum Messen der Windgeschwindigkeit und/oder Windrichtung und/oder einem Fahrgeschwindigkeitssensor und/oder einem Geopositionssensor zu empfangen und die Neigungseinstelleinrichtungen (50, 50-1, 50-2) unter Berücksichtigung der empfangenen Messsensordaten derart anzusteuern, dass das Düngematerial mit einer vorgegebenen Streubreite und/oder einer vorgegebenen Mengenverteilung auf die Agrarfläche ausgebracht wird.
